# EUROPÄISCHE PATENTANMELDUNG

(11) **EP 0 949 124 A2**
(43) Veröffentlichungstag der Anmeldung: **13.10.1999**
(21) Anmeldenummer: 99105061.8
(22) Anmeldetag: 23.03.1999
(51) Int. Cl.: B60R 21/20

(54) **Abdeckung für einen in einem Fahrzeug angeordneten Airbag**

(30) Priorität: 09.04.1998 DE 19816017
(71) Anmelder: Volkswagen Aktiengesellschaft, 38436 Wolfsburg (DE)
(72) Erfinder: Fehst, Andreas, 38446 Wolfsburg (DE)

(57) **Zusammenfassung**

Die Erfindung bezieht sich auf eine Abdeckung für einen in einem Fahrzeug angeordneten Airbag, die an dem den Airbag aufnehmenden Fahrzeugaufbau- oder -ausstattungsteil mehrschichtig ausgebildet ist und einen wegbewegbaren Deckel aufweist, der von Sollbruchstellen zum Aufbrechen bei einer Aktivierung des Airbags umgeben ist. Sie löst die Aufgabe, die Abdeckung so zu gestalten, daß diese beim Aktivieren des Airbags eine definierte Öffnung freigibt und bei der die Gefahr des Absprengens von Bruchstücken aus der Abdeckung weitestgehend gebannt ist. Dazu bilden die Sollbruchstellen unterhalb einer den Schichtaufbau (12; 13; 4) abschließenden Außenhaut (4) ununterbrochene Sollbruchlinien (5) im Schichtaufbau (12; 13) und sind durch auf der der Außenhaut (4) abgewandten Seite durch im wesentlichen punktuelle Verbindungen (6) gestützt.

## Beschreibung

Die Erfindung betrifft eine Abdeckung für einen in einem Fahrzeugaufbau- oder - ausstattungsteil angeordneten Airbag, insbesondere einen in der Instrumententafel eines Kraftfahrzeuges angeordneten Airbag für den Beifahrer.

Airbags sind üblicherweise in dem jeweiligen Fahrzeugaufbau- oder -ausstattungsteil, für den Fahrzeuginsassen verborgen, unter einer fahrzeuginnenraumseitig ausgebildeten Abdeckung angeordnet. Diese ist so gestaltet, daß sie den Airbag bei seiner Entfaltung nicht behindert und dessen Austritt aus dem jeweiligen Anordnungsteil störungsfrei sicherstellt. Dazu sind im Bereich der Abdeckung Sollbruchstellen ausgebildet, die bei einer Aktivierung des Airbags bersten und die Abdeckung zerstörend aufbrechen (DE 43 06 149 A1, EP 0 639 481 A1, EP 0 381 144 A, EP 0 590 779 A1) oder die eine Abdeckplatte aufschwenken oder abheben lassen (DE 44 18 582 A1, DE 44 18 583 A1, DE 4 137 926 A1, US 5 350 191 A, US 5 072 967).

Die Sollbruchstellen sind in der Regel durch Perforationen oder durch Schwächungen unterhalb der Dekor-Oberflächenschicht (Außenhaut) gebildet. Beim Gegenstand nach der DE 44 18 583 A1 ist jedoch auch die Dekor-Oberflächenschicht mit feinen Perforationen versehen, und beim Gegenstand nach der DE 44 18 583 A1 ist in die Oberflächenschicht eine Abdeckkappe definierende Einkerbung eingebracht.

Bei Abdeckungen mit Perforationen zum Zerbersten eines Abdeckungsbereiches oder auch zum Definieren eines wegbewegbaren Deckels besteht die Gefahr, daß beim Aktivieren des Airbags Bruchstücke abgesprengt werden, die die Sicherheit der Fahrzeuginsassen gefährden.

Es ist Aufgabe der Erfindung, eine Abdeckung nach dem Oberbegriff des Anspruchs 1 zu schaffen, die beim Aktivieren des Airbags eine definierte Öffnung freigibt und bei der die Gefahr des Absprengens von Bruchstücken aus der Abdeckung weitestgehend gebannt ist.

Diese Aufgabe wird bei einer Abdeckung nach dem Oberbegriff des Anspruchs 1 durch dessen kennzeichnende Merkmale gelöst.

Danach ist eine Airbag-Abdeckung, die mehrschichtig aufgebaut ist und einen wegbewegbaren Deckel aufweist, der von Sollbruchstellen zum Aufbrechen bei einer Airbag-Aktivierung umgeben ist, erfindungsgemäß so gestaltet, daß die Sollbruchstellen ununterbrochene Bruchlinien bilden, die, ausgenommen die fahrzeuginnenraumseitige Obenflächenschicht (Außenhaut), den gesamten Schichtaufbau durchdringen und bis auf die Außenhaut schwächen, und daß auf der dieser abgewandten Seite des Schichtaufbaus punktuelle Verbindungen ausgebildet sind, die den Deckel zusätzlich zur Außenhaut stützen und halten. Diese (Stütz-)Verbindungen sind erforderlich, um eine fahrzeuginnenraumseitig auf die Außenhaut ausgeübte Druckbeaufschlagung aufzunehmen. Die Verbindungen sind dabei so ausgelegt, daß sie mit der Außenhaut vom aktivierten Airbag aufgebrochen werden. Diese Abdeckung ermöglicht es, eine definierte Öffnung für den Airbag mit - bis auf die Bruchlinien der Außenhaut - glatten Rändern und einen ebenso glattumrandeten Deckel freizugeben, ohne daß aus den vorgefertigten Rändern Stücke des Schichtaufbaus ausgebrochen werden und unkontrolliert in den Fahrgastraum geschleudert werden.

Vorteilhaft ist es, die Abdeckung von innen nach außen aus einer festen und schlagzähen Kunststoff-Trägerplatte, einer auf dieser angeordneten energieabsorbierenden Kunststoff-Zwischenschicht und der Außenhaut zu bilden, da eine solche Ausbildung einen weiteren Beitrag zur Erhöhung der Sicherheit und, durch die Außenhaut, zur Gestaltung des Fahrzeuginnenraumes liefert.

Aus Gründen der Sicherheit sollte der Deckel als Schwenkdeckel bzw. -Klappe ausgebildet sein, derart, daß entlang einer den Deckel definierenden Linie anstelle der Bruchlinie ein Filmscharnier ausgebildet ist, so, daß der Deckel in einer Richtung vom Fahrzeuginsassen weg aus der Abdeckung aufgeschwenkt wird.

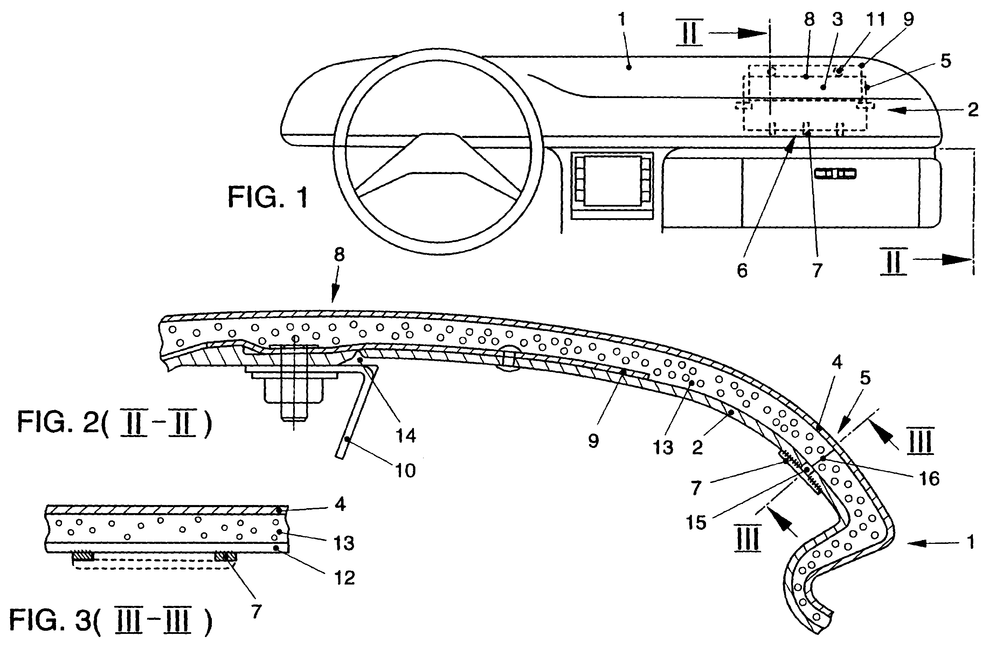

Die punktuellen Verbindungen auf der Innenseite der Abdeckung können vorteilhaft stoffschlüssig durch einen Schweißpunkt oder eine aufgeklebte Überbrückung der Bruchlinie, aber auch durch Formschlußelemente hergestellt sein. Letztere können aus beidseits der Bruchlinie angeordneten Halterungselementen gebildet sein, in die eine Brückenglied, beispielsweise ein Bolzen oder ein Steg, eingeschoben oder eingerastet wird. Die Überbrückungen und die Brückenglieder können zur Verbesserung ihrer Handhabung, insbesondere Anordnung, durch einen im wesentlichen quer zu diesen angeordneten Steg miteinander verbunden sein (in Figur 3 mit Strichlinien angedeutet).

Im Bereich des Filmscharniers kann in dem Schichtaufbau eine verformbare Einlage vorgesehen sein, die vorzugsweise im Bereich des Filmscharniers aus mehreren im Abstand und parallel zueinander angeordneten Bändern gebildet sein. Diese Einlage kann auch in Abhängigkeit von der übrigen Gestaltung und Anordnung der Abdeckung der Stabilisierung der Halterung derselben dienen. Bezüglich des Scharniers ermöglicht sie die Verhinderung eines unkontrollierten Aufbrechens der zwischen dieser und der Außenhaut angeordneten energieabsorbierenden Zwischenschicht und verhindert so das Ausbrechen von Bruchstücken.

Erfindungsgemäß wird eine Abdeckung für einen Airbag, in der ein durch diesen wegbewegbarer Deckel ausgebildet ist und die vorzugsweise im Bereich dieses Deckels aus einer Trägerplatte, einer auf dieser angeordneten energieabsorbierenden Zwischenschicht und einer Außenhaut gebildet ist, dadurch hergestellt, daß der Schichtaufbau unterhalb der Außenhaut zur Ausbildung der Sollbruchlinien von der der Außenhaut abgewandten Seite her durch Fräsen und/ oder Schneiden und/ oder Stanzen und/ oder Ultraschallschneiden durchtrennt wird.

Bei einem aus einer schlagzähen Trägerplatte, einer auf dieser angeordneten energieabsorbierenden Zwischenschicht und der Außenhaut bestehenden Schichtaufbau wird vorzugsweise in die Trägerplatte entlang der Bruchlinien eine Trennfuge eingebracht und anschließend die Zwischenschicht im Bereich dieser Trennfuge bis zur Außenhaut eingeschnitten oder eingestanzt, und anschließend werden die punktuellen Verbindungen hergestellt. Zur Herstellung der Verbindungen können brückenartige Elemente, wie Stege und Bolzen, verwendet werden, die mit diesen entsprechenden und an der Innenseite der Abdeckung beidseits der jeweiligen Sollbruchlinie anzuordnenden Halterungselementen in Eingriff gebracht werden Diese Stege können jedoch auch stoffschlüssig durch Kleben oder Schweißen mit der die Innenseite bildenden Trägerplatte verbunden werden.

Die Erfindung wird nachstehend anhand eines Ausführungsbeispiels erläutert. In der zugehörigen Zeichnung zeigen schematisch:
- Fig. 1:: eine Ansicht der Instrumententafel mit integrierter Abdeckung für einen Beifahrerairbag,
- Fig. 2:: einen Schnitt II-II durch eine erfindungsgemäße Abdeckung und
- Fig. 3:: einen Schnitt III-III durch die Abdeckung.

In Fig. 1 ist in einer Draufsicht auf die Instrumententafel 1 eine Abdeckung 2 für einen Beifahrerairbag von der Fahrzeuginnenseite aus angedeutet. Die Abdeckung 2 ist in die Instrumententafel 1 integriert und als solche von der Fahrzeuginnenseite aus nicht zu erkennen. Sie weist einen Deckel 3 auf, der unter der sichtbaren Außenhaut 4 (Dekor-Oberflächenschicht) (Fig. 2) durch ununterbrochene Sollbruchlinien 5 im Schichtaufbau definiert ist. Die Sollbruchlinien 5 sind strichpunktiert dargestellt. An der Innenseite der Abdeckung 2 sind punktuelle Verbindungen 6 angebracht, die aus aufgeklebten Verbindungsstegen 7 gebildet sind. Die in Fig. 1 gestrichelte obere Linie deutet ein Filmscharnier 8 an, in dessen Bereich eine verformbare Metalleinlage 9 angeordnet und mit der Halterung 10 für die Instrumententafel 1 mit Befestigungsschrauben 11 verschraubt ist.

In Fig. 2 ist die Abdeckung in einem Schnitt II-II dargestellt. Diese ist aus einer Trägerplatte 12 aus Polycarbonat (fest, schlagzäh), einer energieabsorbierenden Zwischenschicht 13 aus geschäumten Polyurethan und der Außenhaut aus Polyvinylchlorid gebildet und weist zwischen der Trägerplatte 12 und der Schaumschicht 13 die Metalleinlage 9 auf. Zur Bildung des Filmscharniers 8 ist die Trägerplatte 12 auf der Innenseite der Abdeckung mit einer Einkerbung 14 versehen, die bis zur Metalleinlage 9 ausgebildet ist. Die Sollbruchlinien 5 sind für die Außenhaut 4 durch eine in die Trägerplatte 12 eingefräste durchlaufende (ununterbrochene) Trennfuge 15 und eine in deren Bereich angeordnete und bis auf die Außenhaut 4 reichende Einstanzung 16 in der Zwischenschicht 13 definiert. Die Verbindungsstege 7 fügen (verkleben) die getrennte Trägerplatte 12 punktuell, wie aus Fig. 1 und Fig. 3 zu erkennen ist. Die Außenhaut 4 überdeckt damit die die Sollbruchlinien 5 definierenden Trennfugen 15 und die Einstanzungen 16.

Im Falle einer Aktivierung des Airbags übt dieser von der Innenseite her großflächig Druck auf den Deckel 3 aus und veranlaßt diesen im Bereich seiner schwächsten Stellen - den Sollbruchlinien 5 - zum Aufbrechen und zum Schwenken um das Filmscharnier 8. Dabei zerbersten die Verbindungsstege 7 oder deren Verklebung, und es reißt die Außenhaut 4. Die übrigen Schichten sind bereits glatt durchtrennt, so daß das Ausbrechen von Bruchstellen aus diesen weitestgehend unterbunden ist.

## Patentansprüche

1. Abdeckung für einen in einem Fahrzeug angeordneten Airbag, die an dem den Airbag aufnehmenden Fahrzeugaufbau- oder -ausstattungsteil mehrschichtig ausgebildet ist und einen wegbewegbaren Deckel aufweist, der von Sollbruchstellen zum Aufbrechen bei einer Aktivierung des Airbags umgeben ist, **dadurch gekennzeichnet,** daß die Sollbruchstellen unterhalb einer den Schichtaufbau (12; 13; 4) abschließenden Außenhaut (4) ununterbrochene Sollbruchlinien (5) im Schichtaufbau (12; 13;) bilden und auf der der Außenhaut (4) abgewandten Seite durch im wesentliche punktuelle Verbindungen (6) gestützt sind.

2. Abdeckung nach Anspruch 1, **dadurch gekennzeichnet,** daß die Abdeckung (2) aus einer festen schlagzähen Trägerplatte (12), einer auf dieser angeordneten energieabsorbierenden Zwischenschicht (13) und der diese abdeckenden Außenhaut (4) gebildet ist.

3. Abdeckung nach Anspruch 1, **dadurch gekennzeichnet,** daß entlang einer den Deckel (3) begrenzenden Linie anstelle der Sollbruchlinie (5) ein Filmscharnier (8) ausgebildet ist.

4. Abdeckung nach Anspruch 1, **dadurch gekennzeichnet,** daß die punktuellen Verbindungen (6) stoffschlüssig sind.

5. Abdeckung nach Anspruch 1, **dadurch gekennzeichnet**, daß die punktuellen Verbindungen (6) durch Formschlußelemente hergestellt sind.

6. Abdeckung nach Anspruch 2, **dadurch gekennzeichnet**, daß die Abdeckung (2) im Bereich des Filmscharniers (8) mit einer verformbaren Einlage (9) versehen ist.

7. Abdeckung nach Anspruch 6, **dadurch gekennzeichnet,** daß die Einlage (9) im Bereich des Filmscharniers (8) aus mehreren im Abstand und parallel zueinander angeordneten Bändern gebildet ist.

8. Verfahren zur Herstellung einer Abdeckung nach Anspruch 1, **dadurch gekennzeichnet dadurch,** daß der Schichtaufbau (12; 13; 4) unterhalb der Außenhaut (4) zur Ausbildung der Sollbruchlinien (5) von der der Außenhaut (4) abgewandten Seite her durch Fräsen und/ oder Schneiden und/ oder Stanzen und/ oder Ultraschallschneiden durchtrennt wird.

9. Verfahren nach Anspruch 8, **dadurch gekennzeichnet,** daß bei einem aus einer schlagzähen Trägerplatte (12), einer auf dieser angeordneten energieabsorbierenden Zwischenschicht (13) und der Außenhaut (4) bestehenden Schichtaufbau in die Trägerplatte (12) entlang der Sollbruchlinien (5) eine Trennfuge (15) eingefräst und anschließend die Zwischenschicht (13) im Bereich der Trennfuge (15) bis zur Außenhaut (4) eingeschnitten oder eingestanzt wird, und daß anschließend die punktuellen Verbindungen (6) hergestellt werden.

10. Verfahren nach Anspruch 9, **dadurch gekennzeichnet,** daß die punktuellen Verbindungen (6) durch die Anordnung brückenartiger Elemente (7) hergestellt werden.

11. Verfahren nach Anspruch 10, **dadurch gekennzeichnet,** daß die Elemente (7) durch einen im wesentlichen quer zu diesen angeordneten Steg miteinander verbunden sind.

12. Verfahren nach Anspruch 10 oder 11, **dadurch gekennzeichnet,** daß die Elemente beidseits der Trennfuge (15) mit der Trägerplatte (12) verklebt werden.
